# EUROPÄISCHE PATENTANMELDUNG

(11) **EP 1 284 432 A1**
(43) Veröffentlichungstag der Anmeldung: **19.02.2003**
(21) Anmeldenummer: 01119481.8
(22) Anmeldetag: 14.08.2001
(51) Int. Cl.: G02B 27/01

(54) **Vorrichtung und Verfahren zur Bedienung eines Fahrerunterstützungssystems**

(71) Anmelder: Ford Global Technologies, Inc., A subsidiary of Ford Motor Company, Dearborn, Michigan 48126 (US)
(72) Erfinder: Schmitz-Ryan, Stephan, Dr., 50672 Köln (DE)
(74) Vertreter: Drömer, Hans-Carsten, Dr.-Ing.

(57) **Zusammenfassung**

Die Erfindung betrifft eine Vorrichtung und ein Verfahren zur Bedienung eines Fahrerunterstützungssystems wie beispielsweise eines Navigationssystems oder einer Geschwindigkeitsregelung. Die Vorrichtung enthält dabei ein Head-Up-Display bestehend aus einem Strahler (4) und einem am Armaturenbrett angebrachten Spiegel (3), mit deren Hilfe Menüoptionen und weitere Informationen des Fahrerunterstützungssystems auf die Windschutzscheibe projiziert werden. Eine Kamera (2) erfasst die Blickrichtung und Augenposition des Fahrers, so dass dieser durch seinen Blick Menüpunkte des Fahrerunterstützungssystems auswählen kann. Gegebenenfalls wird eine durch den Blick getroffene Vorauswahl mit Hilfe eines Tasters am Lenkrad bestätigt. Die Vorrichtung hat den Vorteil, dass der Fahrer ohne Abwendung seines Blickes von der Fahrbahn das Fahrerunterstützungssystem bedienen kann.

## Beschreibung

Die Erfindung betrifft eine Vorrichtung sowie ein Verfahren zur Bedienung mindestens eines Fahrerunterstützungssystems in einem Kraftfahrzeug.

Es besteht ein zunehmender Trend, intelligente Systeme zur Unterstützung des Fahrers eines Kraftfahrzeugs in das Fahrzeug zu integrieren. Beispiele für derartige Systeme sind System zur intelligenten bzw. adaptiven Geschwindigkeitsregelung (cruise control), Navigationssysteme, Stop & Go Systeme, Videosensoren sowie Nachtsichtsysteme. Derartige Systeme erfordern eine verhältnismäßig aufwendige Bedienung mit verschiedenen Menü-Auswahlen, wobei es darauf ankommt, dem Fahrer die Bedienung dieser Systeme zu ermöglichen, ohne dass er von der Steuerung des Fahrzeugs und dem fließenden Verkehr abgelenkt wird.

Zur Darstellung von Informationen für den Fahrer in einer Art und Weise, die ihn möglichst wenig ablenkt, sind sogenannte Head-Up-Displays bekannt, bei denen darzustellende Zeichen und Grafiken auf die Windschutzscheibe projiziert werden. Der Fahrer muss somit zur Wahrnehmung dieser Zeichen und Grafiken seinen Blick nicht mehr von der Fahrbahn abwenden. Ein Head-Up-Display wird beispielsweise in der US 5 231 379 beschrieben. Nachteilig bei den bekannten Systemen ist, dass diese lediglich die Darstellung von Informationen erlauben. Für die Auswahl von Optionen und. die Eingabe von Befehlen sind dagegen zusätzliche Handgriffe des Fahrers wie insbesondere die Betätigung einer Tastatur erforderlich. Für diese Betätigungen muss der Fahrer dann seine Aufmerksamkeit wieder vom Fahrgeschehen abwenden, so dass der durch das Head-Up-Display gewonnene Sicherheitsgewinn zumindest teilweise wieder verloren geht.

Vor diesem Hintergrund war es Aufgabe der vorliegenden Erfindung, ein Verfahren und eine Vorrichtung bereitzustellen, welches bzw. welche die Bedienung von Fahrerunterstützungssystemen auf hohem Komfort- und Sicherheitsniveau erlaubt.

Diese Aufgabe wird durch eine Vorrichtung mit den Merkmalen des Anspruchs 1 sowie durch ein Verfahren mit den Merkmalen des Anspruchs 6 gelöst.

Vorteilhafte Ausgestaltungen sind in den Unteransprüchen enthalten.

Die Vorrichtung zur Bedienung mindestens eines Fahrerunterstützungssystems, bei welchem es sich z.B. um eine Geschwindigkeitsregelung, ein Navigationssystem oder dergleichen handeln kann, enthält
a) ein Head-Up-Display zur Darstellung von Informationen und von Auswahloptionen des Fahrerunterstützungssystems;
b) eine Einrichtung zur Erfassung der Blickrichtung und gegebenenfalls der Augenposition des Fahrers;
c) eine Steuerung, welche mit dem Head-Up-Display und der Einrichtung zur Erfassung der Blickrichtung verbunden und dazu eingerichtet ist, auf der Basis der festgestellten Blickrichtung des Fahrers Auswahlen aus den dargestellten Auswahloptionen zu treffen und entsprechende Aktionen des Fahrerunterstützungssystems zu veranlassen.

Eine derartige Vorrichtung erlaubt eine einfache und vor allem sichere Bedienung eines Fahrerunterstützungssystems, da der Fahrer seinen Blick nicht von der Fahrbahn abwenden muss. Die Darstellung der Informationen vom Fahrerunterstützungssystem sowie der hiervon gebotenen Auswahloptionen erfolgt über ein Head-Up-Display, d. h. durch Projektion auf die Windschutzscheibe. Dies wird ergänzt durch eine Einrichtung zur Erfassung der Blickrichtung und gegebenenfalls der Augenposition des Fahrers sowie eine Steuerung, welche die beobachtete Blickrichtung im Sinne einer Auswahl aus den Auswahloptionen beziehungsweise aus dem Menü des Fahrerunterstützungssystems auswertet. Der Fahrer kann demnach durch bloßes Anschauen (Fixieren) einer auf der Windschutzscheibe dargestellten Auswahloption eine Eingabe betreffend diese Option auslösen und hierdurch das Fahrerunterstützungssystem allein mit seinen Augen bedienen, ohne dabei jemals den Blick von der Fahrbahn abwenden zu müssen. Auf diese Weise lassen sich selbst verhältnismäßig komplexe Menüs von Fahrerunterstützungssystemen komfortabel und ohne jegliche Sicherheitseinbußen bedienen.

Die Vorrichtung kann ferner eine Eingabevorrichtung enthalten, welche mit der Steuerung derart gekoppelt ist, dass eine Betätigung der Eingabevorrichtung die Auswahl einer mit Hilfe der Einrichtung zur Erfassung der Blickrichtung des Fahrers bestimmten Option bestätigt. Die definitive Eingabe einer bestimmten Menüoption des Fahrerunterstützungssystems kann somit zweistufig geschehen, wobei in der ersten Stufe die Menüoption durch einen entsprechenden Blick des Fahrers ausgewählt und diese Auswahl dann über eine Betätigung der Eingabevorrichtung bestätigt wird. Dabei ist zu beachten, dass die Betätigung der Eingabevorrichtung ohne Einbußen bezüglich der Sicherheit möglich ist, da lediglich ein Tastendruck oder dergleichen an einer fest vorgegebenen Stelle vorgenommen werden muss. Die Eingabevorrichtung kann sich somit immer an derselben Stelle befinden, welche der Fahrer auch ohne Hinzuschauen findet. Insbesondere kann die Eingabevorrichtung als ein Bedienelement am Lenkrad des Kraftfahrzeugs ausgebildet sein, so dass der Fahrer diese erreichen kann, ohne die Hände vom Lenkrad zu nehmen.

Die Vorrichtung kann ferner dadurch weitergebildet werden, dass diese eine Spracheingabe-Einrichtung aufweist, welche vom Fahrer gesprochene Kommandos versteht und ausführt. Eine Spracheingabe hat den Vorteil, dass der Fahrer diese bedienen kann, ohne die Hände vom Steuer nehmen zu müssen. Die Spracheingabe-Einrichtung kann insbesondere die grundsätzliche Aktivierung und Deaktivierung der Vorrichtung zur Bedienung eines Fahrerunterstützungssystems ermöglichen. Ferner kann diese bei aktivierter Vorrichtung die Auswahl eines zu bedienenden Fahrerunterstützungssystems erlauben. D. h., dass der Fahrer durch entsprechende Sprachkommandos auswählen kann, ob er das Navigationssystem, die Geschwindigkeitsregelung oder ein anderes Fahrerunterstützungssystem bedienen möchte. Schließlich kann die Spracheingabe auch eine Bestätigung für die mit Hilfe der Einrichtung zur Erfassung der Blickrichtung vorgenommene (Vor-)Auswahl bewirken.

Die in der Vorrichtung enthaltene Einrichtung zur Erfassung der Blickrichtung enthält vorzugsweise eine Kamera wie etwa eine CCD-Kamera, welche auf das Gesicht des Fahrers gerichtet ist und hierdurch die Bestimmung der Augenposition beziehungsweise Blickrichtung erlaubt. Die Kamera kann insbesondere am Innenspiegel des Kraftfahrzeugs und/oder am Armaturenbrett befestigt sein.

Bei Verwendung einer derartigen Kamera kann die Vorrichtung in vorteilhafter Weise um eine mit der Kamera verbundene Bildverarbeitungseinheit erweitert werden, wobei die Bildverarbeitungseinheit dazu eingerichtet ist, Müdigkeitszustände des Fahrers zu erkennen und diese der Steuerung der Vorrichtung zu melden. Die Steuerung kann dann ein geeignetes Warnsignal abgeben, welches den Fahrer auf seine eingeschränkte Fahrtüchtigkeit hinweist und ihn auffordert, eine notwendige Ruhepause einzulegen.

Die Erfindung umfasst weiterhin ein Verfahren zur Bedienung mindestens eines Fahrerunterstützungssystems in einem Kraftfahrzeug, welches die folgenden Schritte enthält:
a) Projektion von Informationen und Auswahloptionen des Fahrerunterstützungssystems auf die Windschutzscheibe des Kraftfahrzeugs;
b) Erfassung der Blickrichtung und gegebenenfalls Augenposition des Fahrers; und
c) Treffen der Auswahlen aus den dargestellten Auswahloptionen auf der Basis der festgestellten Blickrichtung und Veranlassung entsprechender Aktionen des Fahrerunterstützungssystems.

Wie vorstehend in Zusammenhang mit der Vorrichtung bereits erläutert, hat das Verfahren den Vorteil, dass sowohl die Darstellung des Auswahlmenüs eines Fahrerunterstützungssystems als auch die Eingabe einer Auswahl in diesem Menü erfolgen kann, ohne dass der Fahrer seine Aufmerksamkeit oder seinen Blick von der Fahrbahn vor ihm abwendet. Die mit einem derartigen Verfahren erreichbare Sicherheit ist daher gegenüber bekannten Systemen erheblich gesteigert.

Die Projektion der Informationen und Auswahloptionen des Fahrerunterstützungssystems auf die Windschutzscheibe erfolgt vorzugsweise mit Hilfe von polarisiertem Licht. Diese Polarisation kann dann so gewählt werden, dass auf der Scheibe eine maximale Reflexion und damit Lichtausbeute erreicht wird. Ebenso kann die Lichtausbeute durch eine Änderung der Leistung geregelt werden.

Ferner wird die Helligkeit der Projektion auf die Windschutzscheibe vorzugsweise der Umgebungshelligkeit angepasst, damit die Projektion für den Fahrer unter allen Bedingungen gleich gut zu erkennen ist. Zu diesem Zweck wird die Umgebungshelligkeit vorzugsweise mit einem Lichtsensor gemessen und dann auf der Basis der gewonnenen Messwerte zum Beispiel die Polarisation des Lichtes entsprechend angepasst oder die Leistung des Projektors geregelt.

Gemäß einer anderen Weiterbildung des Verfahrens können Vibrationen des Kraftfahrzeugs erfasst und deren Einflüsse auf die Projektion ausgeglichen werden. Das projizierte Bild kann dem Fahrer hierdurch an stets gleichbleibender Stelle präsentiert werden, was dessen Lesbarkeit erhöht. Die Erfassung der Vibrationen kann in einer Vorrichtung der vorstehend erläuterten Art insbesondere über einen piezoelektrischen Vibrationssensor sowie über eine Rückkopplungsschleife mit der Motorregelung erfolgen.

Des weiteren kann die auf die Windschutzscheibe projizierte Information in vorteilhafter Weise ganz oder zum Teil dynamisch in Bezug auf die Umgebungsszene projiziert werden. Das heißt, dass sich der Projektionsort einer bestimmten Information nach der sich dem Fahrer darbietenden Szene richtet. Zum Beispiel können projizierte Pfeile auf eine Straße im Blickfeld des Fahrers hindeuten, in welche nach Vorgabe des Navigationssystems abgebogen werden soll, oder es kann auf zu beachtende Verkehrsschilder im Blickfeld des Fahrers aufmerksam gemacht werden. Um die dazu notwendige richtige Positionierung der Zeichen relativ zum vom Fahrer gesehen Bild der Umgebung vorzunehmen, wird die Blickrichtung des Fahrers bei der Projektion berücksichtigt.

Im Folgenden wird die Erfindung mit Hilfe der Figuren beispielhaft näher erläutert. Es zeigen:
- Fig. 1: schematisch ein Kraftfahrzeug mit den Komponenten einer erfindungsgemäßen Vorrichtung; und
- Fig. 2: schematisch eine Szene in einem Head-Up-Display auf der Windschutzscheibe des Kraftfahrzeug nach Figur 1.

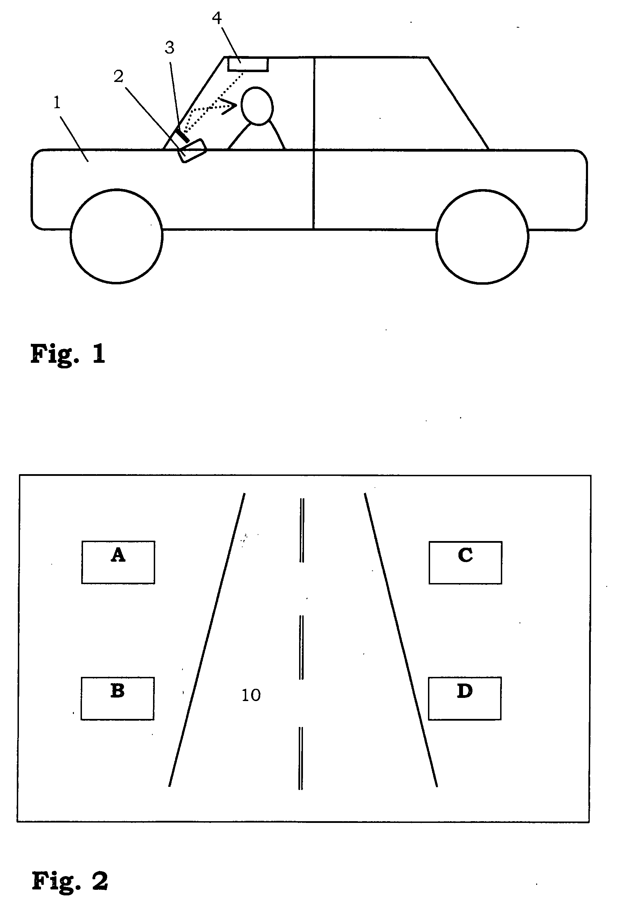

Zukünftige Fahrerunterstützungssysteme wie Navigationssysteme, adaptive Geschwindigkeitsregelungen, Stop & Go-Systeme, Videosensoren oder Nachtsichtsysteme konfrontieren den Fahrer mit zahlreichen neuen Informationen. Außerdem muss der Fahrer mit diesen Systemen interagieren, Informationen sammeln und die richtigen Schlüsse ziehen können. Um eine Bedienung derartiger Fahrerunterstützungssysteme ohne Ablenkung des Fahrers vom Fahrgeschehen zu ermöglichen, wird erfindungsgemäß eine Vorrichtung mit den in Figur 1 gezeigten Bestandteilen vorgeschlagen.

Die in einem Kraftfahrzeug 1 angeordnete Vorrichtung enthält ein Head-Up-Display, welches im gezeigten Beispiel aus einem Strahler 4 an der Innenseite des Daches des Kraftfahrzeuges sowie einem zugeordneten Spiegel 3 auf dem Armaturenbrett besteht. Der Strahler 4 projiziert über den Spiegel 3 ein Bild an die Windschutzscheibe, von wo es in das Auge des Fahrers gelangt. Die dargestellte Installationsweise des Head-Up-Displays ist dabei nur beispielhaft zu verstehen, da zahlreiche andere Konfigurationen möglich sind. Geeignete Head-Up-Displays sind zum Beispiel in der US 5 497 170 und der US 5 231 379 beschrieben.

Figur 2 zeigt ein typisches, durch das Head-Up-Display auf die Windschutzscheibe projiziertes Auswahlmenü vor dem Hintergrund einer Straße 10. Dieses Menü enthält vier Optionen, bei denen es sich im Rahmen eines Navigationssystems zum Beispiel um die Auswahlen
A Stadt auswählen
B Gespeicherte Ziele auswählen
C Hotel auswählen
D Straße auswählen
handeln kann. Die Informationen des Head-Up-Displays werden typischerweise so dargestellt, dass in etwa 2 bis 6 m Entfernung vom Fahrer ihr virtuelles Bild liegt. Dies verringert den notwendigen Aufwand des Auges für das Fokussieren der Informationen, was einerseits einem schnelleren Erfassen der Informationen und andererseits der Sicherheit des Fahrers zugute kommt, da die im Hintergrund befindliche Straße weniger außer Fokus gerät.

Zur optimalen Darstellung der Projektion auf der Windschutzscheibe kann diese mit einer reflektierenden Beschichtung wie etwa einer PVB-Folie beschichtet sein. Zusätzlich oder alternativ kann eine spezielle Lichtpolarisation vorgenommen werden, um eine maximale Reflexion an der Scheibe zu erhalten. Ferner können ein Piezosensor und gegebenenfalls eine Rückkopplung mit der Motorregelung zum vorausschauenden Erkennen von Vibrationen eingesetzt werden, um Vibrationen im optischen System des Head-Up-Displays zu kompensieren.

Darüber hinaus ist es von Vorteil, wenn eine automatische Anpassung an die Umgebungshelligkeit stattfindet. Hierzu kann das Head-Up-Display insbesondere einen Lichtsensor oder automatischen Lichtschalter enthalten und in Abhängigkeit von dessen Messwerten die Helligkeit beziehungsweise Polarisation entsprechend anpassen.

Um die Informationen des Head-Up-Displays sowohl für den Fahrer als auch für den Beifahrer erkennbar zu machen, können sie mit Hilfe von Glasfaserkabeln oder rotierenden Spiegeln an mehrere Stellen der Windschutzscheibe projiziert werden.

Die in Figur 2 dargestellte Szene des Head-Up-Displays zeigt als Menüpunkte nur statische Informationen, welche an stets dieselbe Stelle der Windschutzscheibe projiziert werden können. Darüber hinaus kann das Head-Up-Display jedoch auch dynamische ("non conformal") Informationen darstellen, deren Darstellungsposition auf der Windschutzscheibe sich nach der im Hintergrund befindlichen Szene richtet. Zum Beispiel können sich über eine Kreuzung bewegende Zeichen zum Abbiegen des Fahrzeugs, am Straßenrand befindliche Verkehrszeichen oder der zum vorausfahrenden Fahrzeug einzuhaltende Sicherheitsabstand dynamisch und in Korrelation zum vom Fahrer aus gesehenen Hintergrund auf die Windschutzscheibe projiziert werden.

Zur Inbetriebnahme des in Figur 1 gezeigten Systems wird über ein intelligentes Spracherkennungssystem vom Fahrer ein Kommando eingegeben. Zum Beispiel kann der Fahrer nach einem Tastendruck durch die Worte "Navigationssystem" das Navigationssystem als Fahrerunterstützungssystem auswählen. Das Head-Up-Display projiziert daraufhin das in Figur 2 gezeigte Bild des Navigationssystems ins Blickfeld des Fahrers.

Eine am Innenspiegel oder, wie in Figur 1 gezeigt, am Armaturenbrett angebrachte CCD-Kamera 2 beobachtet anschließend fortlaufend das Gesicht und die Position der Pupillen des Fahrers und verfolgt auf diese Weise die Bewegung seiner Augen. Wenn der Fahrer dann zum Beispiel auf den Menüpunkt "B" schaut, wird dieser vom System hervorgehoben dargestellt. Entweder kann dann eine ausreichend lange Fixierung des Menüpunktes oder die zusätzliche Betätigung eines Tasters, der am Lenkrad angebracht sein kann, die Auswahl dieses Menüpunktes bestätigen. Durch mehrfache Auswahlen von Menüpunkten und Bestätigungen der Auswahlen kann der Fahrer dann durch das gesamte Menü des Navigationssystems wandern, ohne dabei vom Fahrgeschehen wegblicken zu müssen.

Weiterhin kann dem Fahrer zusätzlich ein Drehknopf am Lenkrad zur Auswahl der Fahrerunterstützungsfunktionen zur Verfügung stehen.

Eine zusätzliche Anwendung der Videokamera 2 kann darin liegen, anhand der Augen des Fahrers einen Ermüdungszustand zu erkennen und daraufhin geeignete Maßnahmen wie etwa ein Alarmsignal auszulösen.

## Patentansprüche

1. Vorrichtung zur Bedienung mindestens eines Fahrerunterstützungssystems in einem Kraftfahrzeug (1), enthaltend
a) ein Head-Up-Display (3, 4) zur Darstellung von Informationen und Auswahloptionen des Fahrerunterstützungssystems;
b) eine Einrichtung (2) zur Erfassung der Blickrichtung des Fahrers; und
c) eine Steuerung, welche mit dem Head-Up-Display und der Einrichtung zur Erfassung der Blickrichtung verbunden und dazu eingerichtet ist, auf der Basis der festgestellten Blickrichtung Auswahlen aus den dargestellten Auswahloptionen zu treffen und entsprechende Aktionen des Fahrerunterstützungssystems zu veranlassen.

2. Vorrichtung nach Anspruch 1, **dadurch gekennzeichnet, dass** diese eine Eingabevorrichtung enthält, welche vorzugsweise als Bedienelement am Lenkrad des Kraftfahrzeugs (1) angeordnet ist, wobei die Eingabevorrichtung mit der Steuerung derart gekoppelt ist, dass ihre Betätigung die Auswahl einer mit Hilfe der Einrichtung zur Erfassung der Blickrichtung bestimmten Option bestätigt.

3. Vorrichtung nach Anspruch 1 oder 2, **dadurch gekennzeichnet, dass** diese eine Spracheingabe-Einrichtung enthält zur Aktivierung der Vorrichtung, zur Auswahl eines zu bedienenden Fahrerunterstützungssystems und/oder zur Bestätigung einer mit Hilfe der Einrichtung zur Erfassung der Blickrichtung bestimmten Option.

4. Vorrichtung nach einem der Ansprüche 1 bis 3, **dadurch gekennzeichnet, dass** die Einrichtung zur Erfassung der Blickrichtung eine Kamera (2) umfasst, welche vorzugsweise am Innenspiegel und/oder am Armaturenbrett des Kraftfahrzeugs (1) befestigt ist.

5. Vorrichtung nach Anspruch 4, **dadurch gekennzeichnet, dass** diese eine mit der Kamera (2) verbundene Bildverarbeitungseinheit enthält, welche dazu eingerichtet ist, Müdigkeitszustände des Fahrers zu erkennen und an die Steuerung zu melden.

6. Verfahren zur Bedienung mindestens eines Fahrerunterstützungssystems in einem Kraftfahrzeug (1), wobei
a) Informationen und Auswahloptionen des Fahrerunterstützungssystems auf die Windschutzscheibe projiziert werden;
b) die Blickrichtung des Fahrers erfasst wird; und
c) auf der Basis der festgestellten Blickrichtung Auswahlen aus den dargestellten Auswahloptionen getroffen und entsprechende Aktionen des Fahrerunterstützungssystems veranlasst werden.

7. Verfahren nach Anspruch 6, **dadurch gekennzeichnet, dass** die Projektion der Informationen und Auswahloptionen des Fahrerunterstützungssystems mit Hilfe von polarisiertem Licht erfolgt.

8. Verfahren nach Anspruch 6 oder 7, **dadurch gekennzeichnet, dass** die Helligkeit der Projektion der Umgebungshelligkeit angepasst wird.

9. Verfahren nach mindestens einem der Ansprüche 6 bis 8, **dadurch gekennzeichnet, dass** Vibrationen des Kraftfahrzeugs (1) erfasst und in der Projektion ausgeglichen werden.

10. Verfahren nach einem der Ansprüche 6 bis 9, **dadurch gekennzeichnet, dass** die Informationen zumindest teilweise dynamisch in Bezug auf die Umgebungsszene auf die. Windschutzscheibe projiziert werden.
